# EUROPÄISCHE PATENTANMELDUNG

(11) **EP 1 717 013 A2**
(43) Veröffentlichungstag der Anmeldung: **02.11.2006**
(21) Anmeldenummer: 05026540.4
(22) Anmeldetag: 06.12.2005
(51) Int. Cl.: B29C 65/18

(54) **Vorrichtung zum Siegeln einer Näpfe aufweisenden Formfolie mit einer Deckfolie**

(30) Priorität: 29.04.2005 DE 102005020473
(71) Anmelder: UHLMANN PAC-SYSTEME GmbH & Co. KG, 88471 Laupheim (DE)
(72) Erfinder: Matzenmüller, Jürgen, 88416 Bellamont (DE)
(74) Vertreter: Hentrich, Swen

(57) **Zusammenfassung**

Die Erfindung betrifft eine Vorrichtung zum Siegeln einer, Näpfe (2) aufweisenden Formfolie (1) mit einer Deckfolie (3), mit einer mittels eines Walzenantriebes (4) antreibbaren, in ihrer Umfangsfläche Vertiefungen (6) für die Näpfe (2) aufweisenden Vorschubwalze (5) und einer darauf ablaufenden Siegelwalze (8), zwischen denen hindurch die Formfolie (1) und die Deckfolie (3) durchführbar sind. In der Vorschubwalze (5) ist eine Druckkammer (15) ausgebildet, die über eine Druckmittelleitung (16) mit einer Druckmittelquelle (17) verbunden ist, um über eine Änderung des Umfanges der Vorschubwalze (5) eine genaue Korrelation der Lage der Näpfe (2) und der Vertiefungen (6) zu erreichen.

## Beschreibung

Die Erfindung betrifft eine Vorrichtung zum Siegeln einer, vorzugsweise befüllte Näpfe aufweisenden Formfolie mit einer Deckfolie, mit einer mittels eines Walzenantriebes antreibbaren, in ihrer Umfangsfläche Vertiefungen für die Näpfe aufweisenden Vorschubwalze und einer darauf ablaufenden Siegelwalze, zwischen denen hindurch die Formfolie und die Deckfolie durchführbar sind.

Beim Siegel einer Formfolie bereitet es Schwierigkeiten, die Lage der in der Vorschubwalze ausgebildeten Vertiefungen relativ zu den Näpfen in der Formfolie genau zu regeln, so dass es während des Betriebes einer derartigen Vorrichtung passieren kann, dass die Näpfe nicht exakt in den Vertiefungen platziert werden und somit die Näpfe an den Rändern der Vertiefungen Beschädigungen erleiden. Zur Vermeidung derartiger Beschädigungen der Formfolie ist es aus der DE 10 2004 010 202 B3 bekannt, die Vorschubwalze zweiteilig auszubilden mit parallel zur Drehachse der Vorschubwalze liegender Teilung, wobei der Abstand der beiden Teile der Vorschubwalze verändert werden kann, um die genaue Positionierung der Näpfe in den Vertiefungen zu gewährleisten. Diese Vorrichtung hat sich in der Praxis prinzipiell bewährt, ist allerdings relativ aufwendig.

Der Erfindung liegt die Aufgabe zugrunde, eine Vorrichtung der eingangs genannten Art so auszubilden, dass in einfacher Weise eine genaue Positionierung der Näpfe der Formfolie in den Vertiefungen der Vorschubwalze gewährleistet werden kann.

Diese Aufgabe wird nach der Erfindung bei einer Vorrichtung der eingangs genannten Art dadurch gelöst, dass in der Vorschubwalze eine Druckkammer ausgebildet ist, die über eine Druckmittelleitung mit einer Druckmittelquelle verbunden ist.

Diese Ausführungsform zeichnet sich zunächst durch die in Umfangsrichtung einteilige Gestaltung der Vorschubwalze auf, deren Umfang im Rahmen der elastischen Verformbarkeit des die Vorschubwalze bildenden Materials durch den in der Druckkammer herrschenden Druck verändert werden kann, so dass bei festliegender Drehachse der Vorschubwalze eine Anpassung der Lage der in der Umfangsfläche ausgebildeten Vertiefung an den mit der Formfolie einwandernden Napf möglich ist, wobei diese Anpassung schnell erfolgt, da die Vorschubwalze mit geringer mechanischer Trägheit der äußeren Kraftwirkung folgt.

Zu diesem Zwecke ist es daher für die Erfindung vorteilhaft, wenn die Vorschubwalze aus einem Material gebildet ist, das einen kleinen Elastizitätsmodul (E-Modul) aufweist, da so mit einem geringen Druck relativ große Längenänderungen bzw. Änderungen der Abmessungen der Vorschubwalze erreicht werden können, die also einer entsprechenden Kraftwirkung nur einen geringen Widerstand entgegensetzt. Inbesonders ist es vorteilhaft, wenn die Vorschubwalze aus einem Material gebildet ist, das einen gegenüber einem Metall geringeren E-Modul aufweist, wo in diesem Sinne die Wahl von Kunststoff als Material für die Vorschubwalze günstig ist.

Hinsichtlich der günstigen mechanischen, aber auch chemischen Eigenschaft ist es bevorzugt, wenn die Vorschubwalze aus Polytetrafluorethylen (PTFE) besteht, das mit einem E-Modul von 420 Newton pro Quadratmillimeter ein deutlich kleineres E-Modul aufweist als Aluminium mit 69.000 Newton pro Quadratmillimeter.

Bei Einsatzbedingungen, die die Belastbarkeit von PTFE überschreiten, steht als alternativer Kunststoff Polyamid zur Verfügung.

Im Rahmen der Erfindung weiterhin besonders bevorzugt ist es, wenn die Druckkammer mehrfach vorgesehen ist, um so eine größere Durchmesseränderung bewirken zu können bei Vermeidung einer Deformation der geometrischen Gestalt der Umfangsfläche von der Vorschubwalze.

Dabei hat es sich als zweckmäßig erwiesen, wenn die Vorschubwalze eine Nabe aufweist, von der zur Umfangsfläche weisende Speichen abstehen, die als Druckkammerwände die gleichmäßig über den Umfang verteilt angeordneten Druckkammern trennen. Weiterhin haben die Speichen die Aufgabe, die Kraft auf die Nabe zu übertragen.

Um die Herstellung sowie die Wartung der Vorschubwalze zu vereinfachen, ist es zweckmäßig, wenn die Druckkammer durch zwei axial an der Vorschubwalze angeordnete Deckel verschlossen ist. Dabei ist zu beachten, dass die Deckel selber in Umfangsrichtung durch Änderungen der Druckverhältnisse in der Druckkammer keine Längenänderung erfahren müssen, sondern lediglich sicherstellen, dass in der Druckkammer kein Druckverlust auftritt, auch wenn in Folge der sich ändernden Druckverhältnisse sich auch der Durchmesser der Vorschubwalze verändert. Um während des Betriebs der Vorrichtung die erforderliche Dichtigkeit zu gewährleisten, ist weiterhin vorgesehen, dass die beiden seitlichen Deckel durch einen, oder ggfs mehrere, durch die Druckkammer reichenden Distanzbolzen verbunden sind, durch den sichergestellt werden kann, dass die beiden Deckel die Druckkammer sicher abdichten und dabei die symmetrische Verformung der Vorschubwalze nicht beeinflussen.

Prinzipiell besteht die Möglichkeit, mittels einer elastischen, drehbar an die Vorschubwalze angeschlossenen Druckmittelleitung das Druckmittel in die Druckkammer zu leiten. Hinsichtlich einer hohen Betriebssicherheit ist es allerdings vorteilhaft, auf eine derartige elastische Druckmittelleitung zu verzichten und erfindungsgemäß die Druckmittelleitung über eine Drehdurchführung mit der Druckmittelquelle zu verbinden.

Um nicht lediglich auf Fehljustierungen der Lage der Vertiefungen relativ zu den Näpfen in der Formfolie reagieren zu müssen, sondern präventiv derartige Fehlstellungen verhindern zu können, ist ein Sensor als Teil eines Regelsystems zur Erfassung der Lage eines Napfes der Formfolie vorgesehen, so dass durch entsprechende Druckbeaufschlagung der Druckkammer der Vorschubwalze schon der Durchmesser aufgezwungen werden kann, der zur richtigen Positionierung des Napfes in der Vertiefung erforderlich ist.

Günstig ist es weiterhin, wenn ein Sensor zur Erfassung der Temperatur der Vorschubwalze vorgesehen ist, da insbesondere bei der Wahl von Kunststoff als Material für die Vorschubwalze eine gegenüber Metall verringerte Wärmeleitfähigkeit gegeben ist und der durch die Siegelwalze erfolgende Wärmeeintrag kontrolliert und die mit der Temperaturänderung eintretenden Volumenänderungen der Vorschubwalze bei der Bestimmung des Durchmessers der Vorschubwalze berücksichtigt werden können.

Um möglichst flexibel Druckmesseränderungen der Vorschubwalze bewirken zu können, ist in der Druckmittelleitung ein Proportionalventil und/oder ein Mehrwegeventil angeordnet, die dazu dienen, einen gewünschten Druck präzise einzustellen bzw. zwischen mehreren Druckniveaus zu schalten.

Der Vermeidung einer Beschädigung der aus einem Kunststoff gebildeten Vorschubwalze dient es, wenn ein Sensor zur Erfassung der Präsenz der Deckfolie und der Formfolie zwischen der Vorschubwalze und der Siegelwalze vorgesehen ist, da in Abhängigkeit des Sensorsignals bei fehlenden Folien die Siegelwalze von der Vorschubwalze abgehoben bzw. nicht zur Vorschubwalze abgesenkt werden kann.

Im folgenden wir die Erfindung an einem in der Zeichnung dargestellten Ausführungsbeispiel näher erläutert; es zeigen:
- Fig. 1: eines chematische, perspektivische Darstellung einer erfindungsgemäßen Vorrichtung,
- Fig. 2: eine perspektivische Darstellung einer isolierten Vorschubwalze, abgebildet ohne die die Druckkammer verschließenden Deckel
- Fig. 3: eine Seitenansicht der Vorschubwalze aus Figur 2 mit der durch Pfeilen symbolisierten Kraftwirkung bei Druckbeaufschlagung der Druckkammern, und

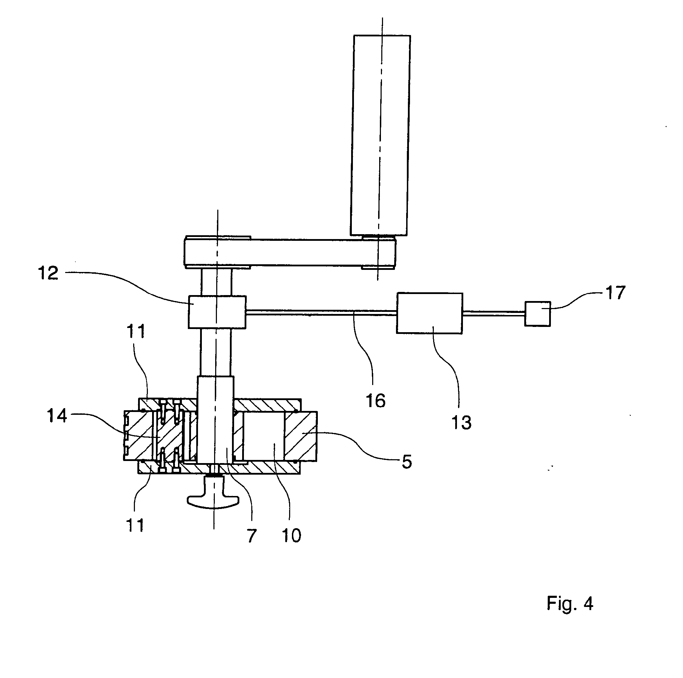

- Fig. 4: einen Schnit durch die Vorschubwalze mit den zu ihrem Einsatz erforderlichen Baugruppen.

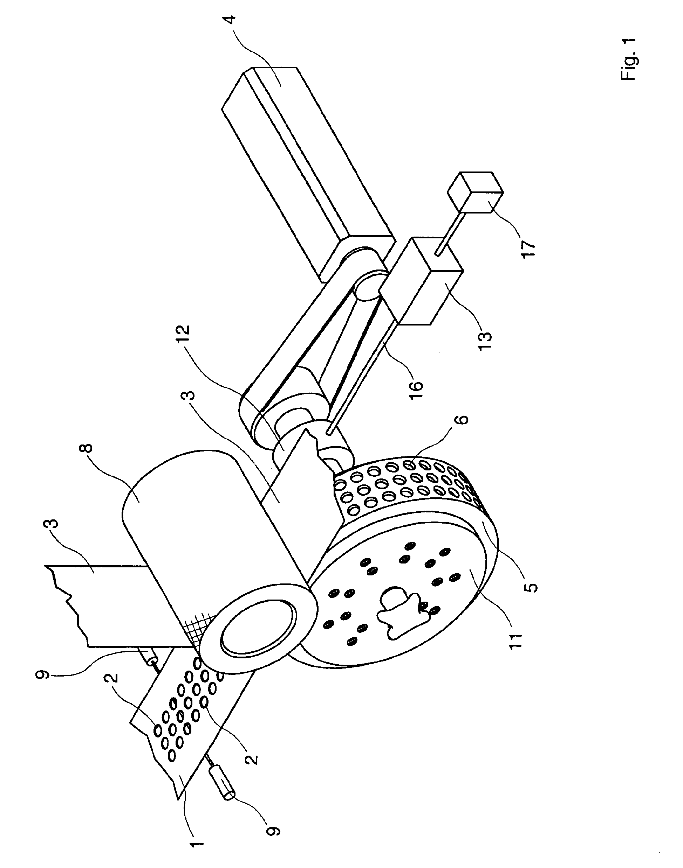

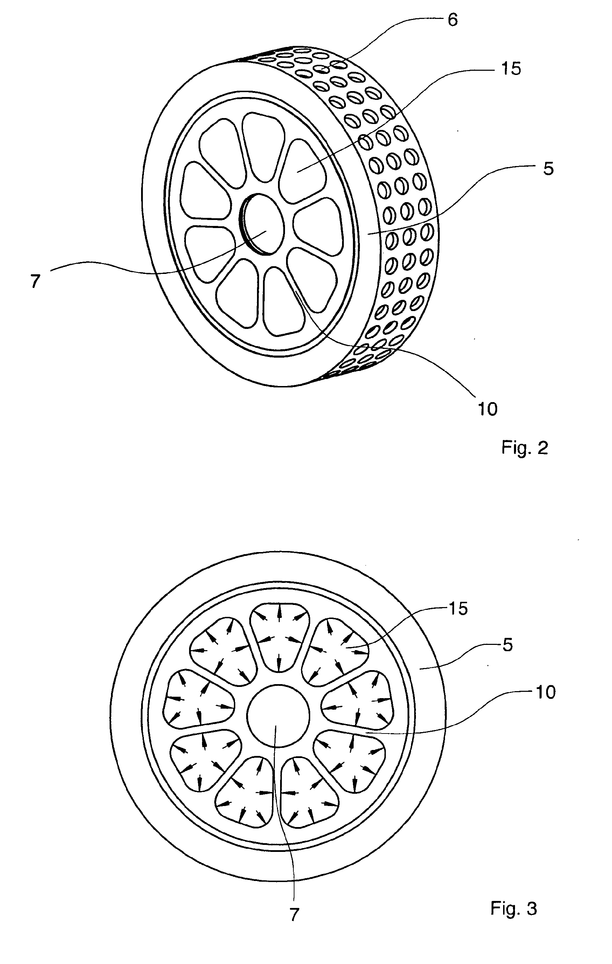

In der Zeichnung ist eine Vorrichtung gezeigt, die zum Siegeln einer befüllte Näpfe 2 aufweisenden Formfolie 1 mit einer Deckfolie 3 dient, wobei sowohl die Formfolie 1 als auch die Deckfolie 3 auf nicht in der Zeichnung dargestellten Vorratsrollen bereitgestellt und gegebenenfalls mit Hilfe von Umlenkrollen zwischen eine beheizbare Siegelwalze 8 sowie eine Vorschubwalze 5 geführt werden. Die Vorschubwalze 5 ist mittels eines Walzenantriebes 4 antreibbar und weist in ihrer Umfangsfläche Vertiefungen 6 für die Näpfe 2 der Formfolie 1 auf. Wie insbesondere aus den Figuren 2 und 3 ersichtlich ist, ist in der Vorschubwalze 5 eine Druckkammer 15 ausgebildet, die in dem dargestellten Ausführungsbeispiel mehrfach realisiert ist. Die Druckkammern 15 stehen über eine Druckmittelleitung 16 mit einer Druckmittelquelle 17 in Verbindung. Die Vorschubwalze 5 ist aus einem Material gebilet, das einen kleinen Elastizitätsmodul (E-Modul) aufweist, das deutlich kleiner ist, als beispielsweise bei Metallen mit einem beispielhaft genannten E-Modul für Aluminium von 69.0000 Newton pro Quadratmillimeter. Als geeignetes Material stehen Kunststoffe und dort insbesondere Polytetrafluorethylen (PTFE) zur Verfügung mit einem E-Modul für PTFE von 420 Newton pro Quadratmillimeter, so dass bei einer derart gebildeten Vorschubwalze 5 durch Druckbeaufschlagung mit ca. 15 bar eine Deformation mit einer angemessenen Durchmesservergrößerung von ca. 0,5 mm und entsprechender Verlängerung des Umfanges erreicht werden kann. Diese Veränderungen sind ausreichend, um die erforderlichen geringen Korrekturen in der Lage der Vertiefungen 6 relativ zu den Näpfen 2 zu bewirken. Die gleichmäßige Druckversorgung der Vielzahl von Druckkammern 15 wird, wie aus Figur 2 ersichtlich, dadurch erreicht, dass die Vorschubwalze 5 eine Nabe 7 aufweist, von der zur Umfangsfläche weisende Speichen 10 abstehen, die als Druckkammerwände die gleichmäßig über den Umfang verteilt angeordneten Druckkammern 15 trennen, wobei die Druckkammern 15 durch zwei axial an der Vorschubwalze angeordnete Deckel 11 verschlossen werden (Figur 1). Die beiden seitlichen Deckel 11 sind durch einen durch die Druckkammer 15 reichenden Distanzbolzen (14) miteinander verbunden, um so eine sichere Abdichtung zu erreichen, die gegebenenfalls mittels eines O-Ringes für lange Betriebszeiten gewährleistet werden kann. Die Druckmittelleitung 16 ist über eine Drehdurchführung 12 mit der Druckmittelquelle 17 verbunden, so dass die drehend antreibbare Vorschubwalze 5 ohne Schwierigkeiten mit dem erforderlichen Druckmittel Druckluft versorgt werden kann.

Die Vorrichtung weist weiterhin einen Sensor 9 als Teil eines Regelsystems zur Fassung der Lage eines Napfes 2 der Formfolie 1 auf (Figur 1), um so anhand der Lage dieses Napfes 2 und der bekannten Transfergeschwindigkeit der Formfolie 1 sowie der bekannten Drehgeschwindigkeit der Vorschubwalze 5 die korrekte Lage von der Vertiefung 6 relativ zu dem Napf 2 zu bestimmen, der in die Vertiefung 6 transportiert werden wird. Zur weiteren` Erhöhung der Betriebssicherheit ist der Vorrichtung zusätzlich ein Sensor zur Erfassung der Temperatur der Vorschubwalze 5 zugeordnet sowie ein Sensor zur Erfassung der Präsenz der Deckfolie 3 und der Formfolie 1 zwischen der Vorschubwalze 5 und der Siegelwalze 8, um ein Aufliegen der beheizbaren Siegelwalze 8 auf der aus Kunststoff bestehenden Vorschubwalze 5 zu vermeiden. In der Druckmittelleitung 16 ist ein Proportionalventil 13 und/oder ein Mehrwegeventil angeordnet.

## Patentansprüche

1. Vorrichtung zum Siegeln einer, vorzugsweise befüllte Näpfe (2) aufweisenden Formfolie (1) mit einer Deckfolie (3), mit einer mittels eines Walzenantriebes (4) antreibbaren, in ihrer Umfangsfläche Vertiefungen (6) für die Näpfe (2) aufweisenden Vorschubwalze (5) und einer darauf ablaufenden Siegelwalze (8), zwischen denen hindurch die Formfolie (1) und die Deckfolie (3) durchführbar sind, **dadurch gekennzeichnet, daß** in der Vorschubwalze (5) eine Druckkammer (15) ausgebildet ist, die über eine Druckmittelleitung (16) mit einer Druckmittelquelle (17) verbunden ist.

2. Vorrichtung nach Anspruch 1, **dadurch gekennzeichnet, daß** die Vorschubwalze (5) aus einem Material gebildet ist, das einen kleinen Elastizitätsmodul (E-Modul) aufweist.

3. Vorrichtung nach Anspruch 2, **dadurch gekennzeichnet, daß** die Vorschubwalze (5) aus einem Material gebildet ist, das einen gegenüber einem Metall geringeren E-Modul aufweist.

4. Vorrichtung nach Anspruch 2 oder 3, **dadurch gekennzeichnet, daß** die Vorschubwalze (5) aus einem Kunststoff besteht.

5. Vorrichtung nach Anspruch 4, **dadurch gekennzeichnet, daß** die Vorschubwalze (5) aus Polytetrafluorethylen (PTFE) besteht.

6. Vorrichtung nach Anspruch 4, **dadurch gekennzeichnet, daß** die Vorschubwalze (5) aus Polyamid besteht.

7. Vorrichtung nach einem der Ansprüche 1 bis 6, **dadurch gekennzeichnet, daß** die Druckkammer (15) mehrfach vorgesehen ist.

8. Vorrichtung nach Anspruch 7, **dadurch gekennzeichnet, daß** die Vorschubwalze (5) eine Nabe (7) aufweist, von der zur Umfangsfläche weisende Speichen (10) abstehen, die als Druckkammerwände die gleichmäßig über den Umfang verteilt angeordneten Druckkammern (15) trennen.

9. Vorrichtung nach einem der Ansprüche 1 bis 8, **dadurch gekennzeichnet, daß** die Druckkammer (15) durch zwei axial an der Vorschubwalze (5) angeordnete Deckel (11) verschlossen ist.

10. Vorrichtung nach Anspruch 9, **dadurch gekennzeichnet, daß** die beiden seitlichen Deckel (11) durch einen durch die Druckkammer (15) reichenden Distanzbolzen (14) verbunden sind.

11. Vorrichtung nach einem der Ansprüche 1 bis 10, **dadurch gekennzeichnet, daß** die Druckmittelleitung (16) über eine Drehdurchführung (12) mit der Druckmittelquelle (17) verbunden ist.

12. Vorrichtung nach einem der Ansprüche 1 bis 11, **dadurch gekennzeichnet, daß** ein Sensor (9) als Teil eines Regelsystems zur Erfassung der Lage eines Napfes (2) der Formfolie (1) vorgesehen ist.

13. Vorrichtung nach einem der Ansprüche 1 bis 12, **dadurch gekennzeichnet, daß** ein Sensor zur Erfassung der Temperatur der Vorschubwalze (5) vorgesehen ist.

14. Vorrichtung nach einem der Ansprüche 1 bis 13, **dadurch gekennzeichnet, daß** in der Druckmittelleitung (16) ein Proportionalventil (13) und/oder ein Mehrwegeventil angeordnet ist.

15. Vorrichtung nach einem der Ansprüche 1 bis 14, **dadurch gekennzeichnet, daß** ein Sensor zur Erfassung der Präsenz der Deckfolie (3) und der Formfolie (1) zwischen der Vorschubwalze (5) und der Siegelwalze (8) vorgesehen ist.

16. Vorrichtung nach einem der Ansprüche 1 bis 15, **dadurch gekennzeichnet, daß** das Druckmittel durch ein Fluid, vorzugsweise durch Druckluft gebildet ist.

17. Vorrichtung nach einem der Ansprüche 1 bis 16, **dadurch gekennzeichnet, daß** die Gestaltung der Druckkammer (15) so getroffen ist, daß sich nur deren Außendurchmesser verändert.
